# EUROPÄISCHE PATENTSCHRIFT

(11) **EP 4 117 489 B1**
(45) Veröffentlichungstag und Bekanntmachung des Hinweises auf die Patenterteilung: **27.03.2024**
(21) Anmeldenummer: 21707605.8
(22) Anmeldetag: 15.02.2021
(51) Int. Cl.: B23Q 11/08, B23Q 39/02, F16P 1/02, F16P 3/02, A47G 23/03

(54) **VORRICHTUNG ZUM BELEUCHTEN VON TRINKFLASCHEN**
APPARATUS FOR ILLUMINATING DRINKS BOTTLES
APPAREIL POUR ÉCLAIRER DES BOUTEILLES DE BOISSON

(30) Priorität: 09.03.2020 AT 5006020 U
(43) Veröffentlichungstag der Anmeldung: 18.01.2023
(73) Patentinhaber: Deutsch, Markus, 8072 Fernitz (AT)
(72) Erfinder: Deutsch, Markus, 8072 Fernitz (AT)
(74) Vertreter: Wirnsberger & Lerchbaum Patentanwälte OG
(86) Internationale Anmeldenummer: PCT/AT2021/060052
(87) Internationale Veröffentlichungsnummer: WO 2021/179024

(56) Entgegenhaltungen:
- WO-A1-2016/196568
- DE-A1-102011 087 119
- JP-A- 2008 027 872
- KR-A- 20120 094 717
- KR-U- 20100 007 290
- US-A1- 2003 076 672

## Beschreibung

Die Erfindung betrifft eine Vorrichtung zum Beleuchten von Trinkflaschen, umfassend einen Flaschenuntersatz zur Aufnahme einer Trinkflasche und eine Ladestation, wobei der Flaschenuntersatz einen elektrischen Energiespeicher und zumindest ein Beleuchtungsmittel aufweist, mit welchem die Trinkflasche beleuchtbar ist.

Häufig wachen Kinder in der Nacht durstig auf und suchen im Dunkeln verzweifelt nach ihrer Trinkflasche. Dies bereitet den Eltern oft schlaflose Nächte, da sie vom Kind gerufen werden, um bei der Suche nach der Trinkflasche behilflich zu sein.

Um diesem Problem entgegenzutreten, sind aus dem Stand der Technik, beispielsweise aus der DE 20 2004 006 375 U1, Flaschenuntersätze bekannt, welche ein integriertes Beleuchtungsmittel aufweisen, sodass die Trinkflasche beleuchtet wird, wodurch es dem Kind ermöglicht wird, die Trinkflasche in der Nacht selbstständig zu finden.

Wenn Getränke jedoch längere Zeit beispielsweise auf einem Nachttisch stehen, erweist sich als Nachteil, dass sich eine Getränkequalität in der Regel verschlechtert, da sich sehr häufig Geschmacksstoffe absenken oder die Getränketemperatur verändert. In heißen Sommernächten kann das Getränk in der Trinkflasche schnell unangenehm warm werden und in kühlen Winternächten kühlt ein in die Trinkflasche gefülltes Heißgetränk schnell aus.

Das Dokument DE 10 2011 087119 A1 offenbart eine Vorrichtung nach dem Oberbegriff des Anspruchs 1.

Erfindungsgemäß ist der Flaschenuntersatz auf die Ladestation aufsetzbar und mit dieser elektrisch verbindbar.

Ein mit der Erfindung erzielter Vorteil ist insbesondere darin zu sehen, dass durch ein Schütteln des Flaschenuntersatzes ebenso ein Schütteln einer darin positionierten Trinkflasche erfolgt, sodass eine Durchmischung des Getränkes erfolgt. Hierbei können Geschmacksstoffe wieder gelöst, resuspendiert und/oder gleichmäßig im Getränk verteilt werden, wodurch die Getränkequalität hoch gehalten wird. Der Schüttler kann hierfür beispielsweise als Vibrationseinheit ausgebildet sein.

Ergänzend zu dem Beleuchtungsmittel, mit welchem Trinkflaschen beleuchtet werden können, kann auch ein weiteres Beleuchtungsmittel an einer Unterseite des Flaschenuntersatzes vorgesehen sein. Dieses zweite Beleuchtungsmittel kann beispielsweise bei einem nächtlichen Gang zur Toilette eingesetzt werden.

Vorteilhaft ist es, wenn der Flaschenuntersatz mit einem Schraubmechanismus, Steckmechanismus und/oder einem Magnetverschluss mit der Trinkflasche verbindbar ist, wobei der Flaschenuntersatz eine Mantelfläche der Trinkflasche zumindest teilweise umschließt. Dadurch kann eine feste Verbindung zwischen dem Flaschenuntersatz und der Trinkflasche gewährleistet werden.

Es ist günstig, wenn der Flaschenuntersatz ein Display, vorzugsweise eine Zeitanzeige, aufweist. Das Display kann beispielsweise mehrere LEDs umfassen. Die LEDs können vorzugsweise so angeordnet sein, dass eine Uhrzeit angezeigt werden kann. Alternativ oder zusätzlich können die LEDs so angeordnet sein, dass an einer Mantelfläche des Flaschenuntersatzes ein Gesicht dargestellt werden kann, um ein Kind beim Aufwachen zu beruhigen oder zu erheitern.

Um Musik wiederzugeben oder als Wecker eingesetzt werden zu können, kann vorgesehen sein, dass der Flaschenuntersatz einen Lautsprecher und/oder einen Kopfhöreranschluss aufweist. Der Flaschenuntersatz kann auch zur Ausgabe von Sprache übe den Lautsprecher bzw. den Kopfhöreranschluss ausgebildet sein, sodass beispielsweise eine Roboterstimme ausgegeben werden kann.

Vorzugsweise ist vorgesehen, dass der Flaschenuntersatz eine Heizeinrichtung zum Beheizen der Trinkflasche aufweist. Dadurch kann ein Heißgetränk, beispielsweise ein Tee oder ein Kakao über einen besonders langen Zeitraum warmgehalten und ein unerwünschtes Abkühlen vermieden werden.

Bevorzugt ist vorgesehen, dass die Ladestation einen Hauptkörper und zumindest zwei bewegliche armförmige Elemente aufweist, wobei die beweglichen armförmigen Elemente gelenkig am Hauptkörper gelagert sind. Dadurch kann die Ladestation individuell angepasst und in einen stabilen Stand gebracht werden.

Vorteilhaft ist es, wenn der Hauptkörper als Torso ausgebildet ist, wobei vier bewegliche armförmige Elemente vorgesehen sind, sodass der Torso zwei Arme und zwei Beine aufweist. Somit kann die Ladestation mittels der beweglichen Beine in eine stabile Lage gebracht werden. Ferner können die beweglichen Arme beispielsweise zur Stabilisierung der Trinkflasche nach oben bewegt werden. Optional können die Arme automatisch bewegt werden, um den Flaschenuntersatz zu schütteln.

Es ist günstig, wenn zumindest ein bewegliches armförmiges Element einen USB-Anschluss aufweist, welcher an einem vom Hauptkörper abgewandten Ende angeordnet ist. Dadurch kann beispielsweise ein Handyladekabel verbunden werden. Darüber hinaus kann der USB-Anschluss oder eine daran angeschlossene Komponente durch eine Bewegung des Armes in eine gewünschte Position gebracht werden.

Am Flaschenuntersatz und/oder an der Ladestation können natürlich auch weitere Einrichtungen vorgesehen sein, wie beispielsweise eine Leselampe, eine Kamera, ein Mikrofon und/oder ein Heizpad für Anti-Insekten-Plättchen. Diese Einrichtungen können auch durch den Energiespeicher mit Energie versorgt werden, gegebenenfalls auch durch den USB-Anschluss. Die Einrichtungen können in den Flaschenuntersatz und/oder die Ladestation integriert oder mit diesen lösbar verbindbar sein.

Um den USB-Anschluss vor Verunreinigungen, Spritzwasser oder dergleichen zu schützen, kann vorgesehen sein, dass der USB-Anschluss eine abnehmbare, vorzugsweise faustförmige, Abdeckkappe aufweist. Die Ladestation kann vorzugsweise als Roboterkörper mit Armen und Beinen ausgebildet sein. Vorzugsweise ist die Abdeckkappe als Hand oder Faust des Roboterkörpers ausgebildet.

Weiter ist es günstig, wenn ein Ventilator vorgesehen ist, welcher mit einem beweglichen, armförmigen Element verbindbar, vorzugsweise in dieses steckbar, ist. Der Ventilator kann beispielsweise durch die Beweglichkeit der Arme in eine gewünschte Position gebracht werden, sodass das Getränk in der Trinkflasche gegebenenfalls gekühlt werden kann.

Alternativ oder ergänzend kann auch eine Heizeinrichtung vorgesehen sein, welche lösbar mit einem armförmigen Element verbindbar und beispielsweise durch einen im armförmigen Element angeordneten USB-Anschluss mit Energie versorgbar ist, um das Getränk in der Trinkflasche zu erwärmen.

Damit die Ladestation auch im Dunkeln leicht gefunden werden kann, ist es vorteilhaft, wenn der Hauptkörper ein weiteres Beleuchtungsmittel aufweist.

Um eine Anzeige, eine Tonwidergabe oder ein Schütteln zu steuern, kann vorgesehen sein, dass der Flaschenuntersatz und/oder die Ladestation eine Einrichtung zur drahtlosen Datenübertragung aufweisen. Hierzu können insbesondere ein WLAN-Modul und/oder ein Bluetooth-Modul vorgesehen sein.

Ferner kann es günstig sein, wenn der Flaschenuntersatz und/oder die Ladestation zumindest einen Sensor, insbesondere einen Temperatursensor, einen Beschleunigungssensor, einen Lichtsensor, einen Infrarot-Sensor und/oder einen Abstandssensor aufweist. Dadurch kann eine Raumtemperatur, eine Getränketemperatur, eine Lage der Ladestation oder des Flaschenuntersatzes und/oder eine Raumhelligkeit erfasst werden. Gegebenenfalls kann der Ventilator, das Display oder dergleichen abhängig von erfassten Werten reguliert werden. Mittels eines Infrarot-Sensors kann eine Bedienung mit einer Infrarot-Fernbedienung auf einfache Weise umgesetzt werden, um insbesondere eine Weckfunktion, eine Schüttelfunktion und/oder ein Licht mit einer Fernbedienung zu aktivieren.

Weiter kann auch vorgesehen sein, dass der Flaschenuntersatz eine Datenverarbeitungseinrichtung und einen Datenspeicher, beispielsweise einen Microcontroller und einen internen Speicher und/oder eine Einrichtung zum Lesen und Schreiben von Speicherkarten, insbesondere einen Slot für eine SD-Karte, aufweist. Dadurch kann der Flaschenuntersatz beispielsweise programmierbar ausgebildet sein, sodass beispielsweise von einem Benutzer oder Hersteller vordefinierte Botschaften über das Display und/oder einen Lautsprecher ausgebbar, Einrichtungen wie ein Ventilator, eine Heiz- oder Kühleinrichtung gezielt ansteuerbar und/oder Daten von Sensoren auslesbar und für entsprechende Steuerzwecke einsetzbar sind.

Um Energie zu sparen, kann vorgesehen sein, dass das oder die Beleuchtungsmittel als LED ausgebildet sind.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine Darstellung einer erfindungsgemäßen Vorrichtung;
Fig. 2 eine Darstellung eines Flaschenuntersatzes;

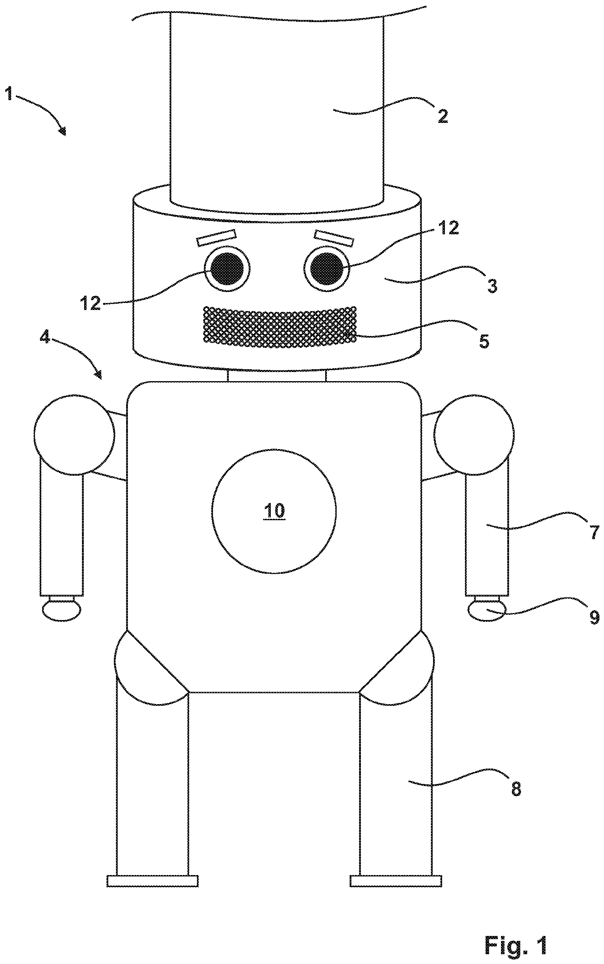

Fig. 1 zeigt eine erfindungsgemäße Vorrichtung 1 zur Beleuchtung von Trinkflaschen 2, umfassend einen Flaschenuntersatz 3, in welchem eine Trinkflasche 2 aufgenommen ist, und eine Ladestation 4, wobei der Flaschenuntersatz 3 auf die Ladestation 4 aufgesetzt ist.

Der Flaschenuntersatz 3 weist ein Display 5 auf, welches mehrere LEDs umfasst. Die LEDs sind hierbei rasterförmig angeordnet. Über die LEDs können beispielsweise eine Uhrzeit oder verschiedene andere Informationen angezeigt werden. Weiter sind am Flaschenuntersatz Tasten 12 vorgesehen, mit welchen verschiedenste Funktionen ausführbar sind. So kann der Flaschenuntersatz beispielsweise eine Weckfunktion aufweisen und derart programmiert sein, dass ein Wecker durch Drücken einer der Tasten deaktivierbar ist. Die Tasten 12 können wie dargestellt in Form von Augen eines Roboters ausgebildet sein. Alternativ ist natürlich auch eine Ausführung denkbar, bei welcher die Tasten 12 an einer anderen Position angeordnet und beispielsweise als Ohren des Roboters ausgebildet sind.

Ferner weist die Ladestation 4 einen Hauptkörper 6 mit mehreren beweglich am Hauptkörper 6 gelagerten armförmigen Elementen auf. Die relativ zum Hauptkörper beweglichen, armförmigen Elemente sind als Arme 7 und Beine 8 ausgebildet, sodass die Ladestation 4 zwei Arme 7 und zwei Beine 8 aufweist. Die dargestellte Vorrichtung 1 weist somit etwa die Form eines Roboters auf, was insbesondere für Kinder sehr ansprechend sein kann, sodass die Vorrichtung beispielsweise auch als Spielzeug nutzbar ist.

Die Arme 7und die Beine 8 sind gelenkig am Hauptkörper 6 gelagert. Bevorzugt weisen die armförmigen Elemente jeweils zumindest ein weiteres Gelenk auf, um eine Beweglichkeit um eine weitere Achse zu ermöglichen. Dadurch kann die Vorrichtung 1 beispielsweise auch auf schrägen Möbeln und dergleichen in einfacher Weise stabil positioniert werden.

Ein üblicherweise als Vibrationseinheit, wie diese beispielsweise in Mobiltelefonen eingesetzt wird, ausgebildeter Schüttler ist im Ausführungsbeispiel im Flaschenuntersatz 3 angeordnet, wenngleich ein solcher Schüttler grundsätzlich auch im Hauptkörper 6, den Armen 7 und/oder den Beinen 8 angeordnet sein könnte, um Geschmacksstoffe im Getränk zu lösen und so eine dauerhaft hohe Qualität des Getränkes zu gewährleisten.

In einer vorteilhaften Ausführungsform weist zumindest ein Arm 7 einen USB-Anschluss auf, welcher an einem dem Hauptkörper 6 abgewandten Ende angeordnet und mit einer Abdeckkappe 9 abgedeckt ist.

Hierbei ist es möglich, einen Ventilator 11 in den USB-Anschluss zu stecken, welcher über den USB-Anschluss mit Strom versorgt wird. Durch die Beweglichkeit der Arme 7 kann der Ventilator 11 so positioniert werden, dass die Trinkflasche 2 im Flaschenuntersatz 3 belüftet und dadurch gegebenenfalls gekühlt wird.

Die Vorrichtung 1 kann auch mit einem Smartphone koppelbar ausgebildet sein und hierzu beispielsweise eine Bluetooth-Einrichtung aufweisen, sodass Funktionen der Vorrichtung 1 wie das Schütteln und das Kühlen des Getränkes und eine über das Display 5 wiedergegebene Information mittels des Smartphones steuerbar sind.

Ferner kann auch vorgesehen sein, dass die Einrichtung Funktionen eines Weckers aufweist, sodass beispielsweise zu einer bestimmten Uhrzeit akustische und/oder optische Signale durch die Vorrichtung 1 abgegeben werden. Auch diese Funktion kann mittels eines Smartphones programmiert werden, welches drahtgebunden, beispielsweise mittels des USB-Anschlusses, oder drahtlos mit der Vorrichtung 1 gekoppelt werden kann.

Darüber hinaus kann die Vorrichtung 1 auch ein Mikrophon aufweisen, um beispielsweise in Verbindung mit einem Smartphone als Babyphone eingesetzt zu werden. In dem Zusammenhang kann auch eine Kamera an der Vorrichtung 1, insbesondere am Flaschenuntersatz 3 oder am Hauptkörper 6, vorgesehen sein. Das Mikrophon und die Kamera können auch als separate Module ausgebildet sein, welche mit der Vorrichtung 1 beispielsweise lösbar verbindbar sind, insbesondere über einen USB-Anschluss, um allfällige Bedenken in Bezug auf einen Schutz von persönlichen Daten leicht ausräumen zu können.

Durch die Beweglichkeit der Beine 8 kann ein stabiler Stand der Ladestation 4 gewährleistet werden. Gegebenenfalls kann die Ladestation 4 durch Anwinkeln der Beine 8 hingesetzt werden.

Um die Ladestation 4 selbst zu beleuchten oder eine Ladetätigkeit anzuzeigen, kann der Hauptkörper 6 ein Beleuchtungsmittel 10 umfassen. Weiter kann bodenseitig im Flaschenuntersatz 3 ein Leuchtmittel angeordnet sein, um die Trinklasche von unten zu beleuchten.

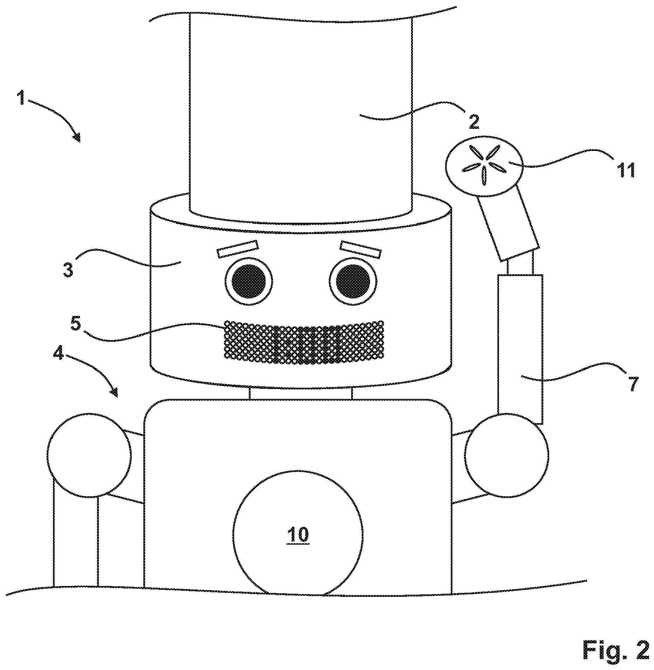

In Fig. 2 ist die Vorrichtung 1 gezeigt, wobei ein Ventilator 11 an den in einem Arm 7 angeordneten USB-Anschluss angeschlossen ist und der Arm 7 zur Kühlung der Trinkflasche 2 positioniert ist. Das Display 5 ist hierbei mit einer Zeitanzeige dargestellt.

Eine erfindungsgemäße Vorrichtung 1 kann insbesondere als Flaschenuntersatz 3 für Trinkflaschen 2 in Kinderzimmern vorteilhaft eingesetzt werden. Einerseits ist eine Beleuchtung der Trinkflasche 2 möglich, sodass aufwachende Kinder auch bei sonstiger Dunkelheit die Trinkflasche 2 auf einfache Weise auffinden können. Andererseits ist durch den Schüttler ein gleichmäßiges Verteilen von Geschmacksstoffen in einem in der Trinkflasche 2 befindlichen Getränk und durch den Ventilator 11 eine kontinuierliche Kühlung des Getränkes ermöglicht, wodurch zudem eine verbesserte Qualität des Getränkes erreicht ist.

## Patentansprüche

1. Vorrichtung (1) zur Beleuchtung von Trinkflaschen (2), umfassend einen Flaschenuntersatz (3) zur Aufnahme einer Trinkflasche (2) und eine Ladestation (4), wobei der Flaschenuntersatz (3) einen elektrischen Energiespeicher und zumindest ein Beleuchtungsmittel (10) aufweist, mit welchem die Trinkflasche (2) beleuchtbar ist, wobei die Ladestation (4) einen Schüttler aufweist, um den Flaschenuntersatz (3) zu schütteln, **dadurch gekennzeichnet, dass** der Flaschenuntersatz (3) auf die Ladestation (4) aufsetzbar und mit dieser elektrisch verbindbar ist.

2. Vorrichtung (1) nach Anspruch 1, **dadurch gekennzeichnet, dass** ein weiteres Beleuchtungsmittel an einer Unterseite des Flaschenuntersatzes (3) vorgesehen ist.

3. Vorrichtung (1) nach Anspruch 1 oder 2, **dadurch gekennzeichnet, dass** der Flaschenuntersatz (3) mit einem Schraubmechanismus, Steckmechanismus und/oder einem Magnetverschluss mit der Trinkflasche (2) verbindbar ist, wobei der Flaschenuntersatz (3) eine Mantelfläche der Trinkflasche (2) zumindest teilweise umschließt.

4. Vorrichtung (1) nach Anspruch 1 bis 3, **dadurch gekennzeichnet, dass** der Flaschenuntersatz (3) ein Display (5), vorzugsweise eine Zeitanzeige, aufweist.

5. Vorrichtung (1) nach einem der Ansprüche 1 bis 4, **dadurch gekennzeichnet, dass** der Flaschenuntersatz (3) einen Lautsprecher und/oder einen Kopfhöreranschluss aufweist.

6. Vorrichtung (1) nach einem der Ansprüche 1 bis 5, **dadurch gekennzeichnet, dass** der Flaschenuntersatz (3) eine Heizeinrichtung zum Beheizen der Trinkflasche (2) aufweist.

7. Vorrichtung (1) nach einem der Ansprüche 1 bis 6, **dadurch gekennzeichnet, dass** die Ladestation (4) einen Hauptkörper (6) und zumindest zwei bewegliche armförmige Elemente aufweist, wobei die beweglichen armförmigen Elemente gelenkig am Hauptkörper (6) gelagert sind.

8. Vorrichtung (1) nach Anspruch 7, **dadurch gekennzeichnet, dass** der Hauptkörper (6) als Torso ausgebildet ist, wobei vier bewegliche armförmige Elemente vorgesehen sind, sodass der Torso zwei Arme (7) und zwei Beine (8) aufweist.

9. Vorrichtung (1) nach Anspruch 7 oder 8, **dadurch gekennzeichnet, dass** zumindest ein bewegliches armförmiges Element einen USB-Anschluss aufweist, welcher an einem vom Hauptkörper (6) abgewandten Ende angeordnet ist.

10. Vorrichtung (1) nach Anspruch 9, **dadurch gekennzeichnet, dass** der USB-Anschluss eine abnehmbare, vorzugsweise faustförmige, Abdeckkappe (9) aufweist.

11. Vorrichtung (1) nach einem der Ansprüche 7 bis 10, **dadurch gekennzeichnet, dass** ein Ventilator (11) vorgesehen ist, welcher mit einem beweglichen, armförmigen Element verbindbar, vorzugsweise in dieses steckbar, ist.

12. Vorrichtung (1) nach einem der Ansprüche 7 bis 11, **dadurch gekennzeichnet, dass** der Hauptkörper (6) ein weiteres Beleuchtungsmittel (10) aufweist.

13. Vorrichtung (1) nach einem der Ansprüche 1 bis 12, **dadurch gekennzeichnet, dass** der Flaschenuntersatz (3) und/oder die Ladestation (4) eine Einrichtung zur drahtlosen Datenübertragung aufweisen.

14. Vorrichtung (1) nach einem der Ansprüche 1 bis 13, **dadurch gekennzeichnet, dass** der Flaschenuntersatz (3) und/oder die Ladestation (4) zumindest einen Sensor, insbesondere einen Temperatursensor, einen Beschleunigungssensor, einen Lichtsensor und/oder einen Abstandssensor aufweisen.

15. Vorrichtung (1) nach einem der Ansprüche 1 bis 14, **dadurch gekennzeichnet, dass** das oder die Beleuchtungsmittel (10) als LED ausgebildet sind.

## Claims

1. A device (1) for illuminating drinking bottles (2), comprising a bottle base (3) for receiving a drinking bottle (2) and a charging station (4), wherein the bottle base (3) has an electrical energy storage device and at least one lighting means (10), the drinking bottle (2) being able to be illuminated thereby, wherein the charging station (4) has a shaker in order to shake the bottle base (3), **characterized in that** the bottle base (3) can be placed on the charging station (4) and can be electrically connected thereto.

2. The device (1) according to Claim 1, **characterized in that** a further lighting means is provided on a lower face of the bottle base (3).

3. The device (1) according to Claim 1 or 2, **characterized in that** the bottle base (3) can be connected to the drinking bottle (2) by a screw mechanism, plug-in mechanism and/or a magnetic closure, wherein the bottle base (3) at least partially encloses a lateral surface of the drinking bottle (2).

4. The device (1) according to Claim 1 to 3, **characterized in that** the bottle base (3) has a display (5), preferably a time display.

5. The device (1) according to one of Claims 1 to 4, **characterized in that** the bottle base (3) has a loudspeaker and/or a headphone connection.

6. The device (1) according to one of Claims 1 to 5, **characterized in that** the bottle base (3) has a heating apparatus for heating the drinking bottle (2).

7. The device (1) according to one of Claims 1 to 6, **characterized in that** the charging station (4) has a main body (6) and at least two movable arm-shaped elements, wherein the movable arm-shaped elements are mounted in an articulated manner on the main body (6).

8. The device (1) according to Claim 7, **characterized in that** the main body (6) is configured as a torso, wherein four movable arm-shaped elements are provided so that the torso has two arms (7) and two legs (8).

9. The device (1) according to Claim 7 or 8, **characterized in that** at least one movable arm-shaped element has a USB connection which is arranged on an end facing away from the main body (6).

10. The device (1) according to Claim 9, **characterized in that** the USB connection has a removable, preferably fist-shaped, cover cap (9).

11. The device (1) according to one of Claims 7 to 10, **characterized in that** a fan (11) is provided, said fan being able to be connected to a movable arm-shaped element, preferably being able to be plugged therein.

12. The device (1) according to one of Claims 7 to 11, **characterized in that** the main body (6) has a further lighting means (10).

13. The device (1) according to one of Claims 1 to 12, **characterized in that** the bottle base (3) and/or the charging station (4) have an apparatus for wireless data transmission.

14. The device (1) according to one of Claims 1 to 13, **characterized in that** the bottle base (3) and/or the charging station (4) have at least one sensor, in particular a temperature sensor, an acceleration sensor, a light sensor and/or a distance sensor.

15. The device (1) according to one of Claims 1 to 14, **characterized in that** the one or more lighting means (10) are configured as LEDs.

## Revendications

1. Dispositif (1) pour éclairer des bouteilles (2), comprenant un fond de bouteille (3) pour contenir une gourde (2) et une station de charge (4), dans lequel le fond de bouteille (3) présente un accumulateur d'énergie électrique et au moins un moyen d'éclairage (10) avec lequel la gourde (2) peut être éclairée, dans lequel la station de charge (4) présente un shaker pour secouer le fond de bouteille (3), **caractérisé en ce que** le fond de bouteille (3) peut être posé sur la station de charge (4) et peut y être connecté électriquement.

2. Dispositif (1) selon la revendication 1, **caractérisé en ce qu'**un moyen d'éclairage supplémentaire est prévu sur une face inférieure du fond de bouteille (3).

3. Dispositif (1) selon la revendication 1 ou 2, **caractérisé en ce que** le fond de bouteille (3) peut être relié à la gourde (2) par un mécanisme à vis, un mécanisme enfichable et/ou une fermeture magnétique, dans lequel le fond de bouteille (3) entoure au moins partiellement une surface enveloppante de la gourde (2) .

4. Dispositif (1) selon les revendications 1 à 3, **caractérisé en ce que** le fond de bouteille (3) présent un affichage (5), de préférence un affichage de l'heure.

5. Dispositif (1) selon une des revendications 1 à 4, **caractérisé en ce que** le fond de bouteille (3) présente un haut-parleur et/ou une prise casque.

6. Dispositif (1) selon une des revendications 1 à 5, **caractérisé en ce que** le fond de bouteille (3) présente un dispositif de chauffage pour chauffer la gourde (2).

7. Dispositif (1) selon une des revendications 1 à 6, **caractérisé en ce que** la station de charge (4) présente un corps principal (6) et au moins deux éléments mobiles en forme de bras, dans lequel les éléments mobiles en forme de bras sont articulés sur le corps principal (6).

8. Dispositif (1) selon la revendication 7, **caractérisé en ce que** le corps principal (6) est conçu comme un torse, dans lequel quatre éléments mobiles en forme de bras sont prévus, de sorte que le torse présente deux bras (7) et deux jambes (8).

9. Dispositif (1) selon la revendication 7 ou 8, **caractérisé en ce qu'**au moins un élément mobile en forme de bras présente un port USB qui est disposé à une extrémité opposée au corps principal (6).

10. Dispositif (1) selon la revendication 9, **caractérisé en ce que** le port USB est doté d'un capuchon (9) amovible, de préférence en forme de poing.

11. Dispositif (1) selon une des revendications 7 à 10, **caractérisé en ce qu'**il est prévu un ventilateur (11), qui peut être connecté à un élément mobile en forme de bras, de préférence branché dessus.

12. Dispositif (1) selon une des revendications 7 à 11, **caractérisé en ce que** le corps principal (6) présente un moyen d'éclairage supplémentaire (10).

13. Dispositif (1) selon une des revendications 1 à 12, **caractérisé en ce que** le fond de bouteille (3) et/ou la station de charge (4) disposent d'un dispositif de transmission de données sans fil.

14. Dispositif (1) selon une des revendications 1 à 13, **caractérisé en ce que** le fond de bouteille (3) et/ou la station de charge (4) présente au moins un capteur, notamment un capteur de température, un capteur d'accélération, un capteur de lumière et/ou un capteur de distance.

15. Dispositif (1) selon une des revendications 1 à 14, **caractérisé en ce que** le ou les moyens d'éclairage (10) sont réalisés sous forme de LED.
